# EUROPEAN PATENT SPECIFICATION

(11) **EP 0 526 949 B1**
(45) Date of publication and mention of the grant of the patent: **30.10.1996**
(21) Application number: 92202415.3
(22) Date of filing: 04.08.1992
(51) Int. Cl.: C08G 67/02

(54) **Catalyst compositions suitable for the preparation of polymers of carbon monoxide and alpha-olefins**
Katalysatorzusammensetzungen für die Herstellung von Polymeren aus Kohlenmonoxyd und Alpha-Olefinen
Compositions catalytiques pour la préparation de polymères de monoxydes de carbone et d'alpha-oléfines

(30) Priority: 06.08.1991 NL 9101351
(43) Date of publication of application: 10.02.1993
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 257 663

## Description

The invention relates to novel catalyst compositions which are suitable for the preparation of polymers of carbon monoxide with one or more α-olefins.

Linear alternating polymers of carbon monoxide with ethene and optionally one or more other α-olefins, i.e. linear polymers in which the units originating in carbon monoxide and the units originating in the olefin(s) are present in a substantially alternating order, can be prepared by contacting the monomers in the presence of a liquid diluent in which the polymers are insoluble or virtually insoluble with a catalyst composition based upon:
a) a Group VIII metal,
b) an acid with a pKa of less than 2, and
c) a phosphorus bidentate ligand of the general formula R¹R²P-R-PR³R⁴ in which R¹ to R⁴ represent identical or different, optionally polar substituted monovalent hydrocarbyl groups and R is a divalent organic bridging group containing at least two carbon atoms in the bridge connecting the two phosphorus atoms.

As phosphorus bidentate ligands, compounds are eligible in which the groups R¹ to R⁴ are unbranched alkyl groups, such as ethyl or n-butyl groups, and also in which these groups are branched alkyl groups, such as 2-propyl or 2-butyl groups. Compounds in which the groups R¹ to R⁴ are aryl groups, such as phenyl groups, are also very suitable as catalyst components. As regards the quantity of acid to be included in the catalyst compositions, active catalyst compositions can be formulated both with small quantities of acid, such as 1 mol per gram atom Group VIII metal, and with larger quantities of acid, such as 100 mol per gram atom Group VIII metal.

The bulk density is one of the most important properties of the polymer powder obtained from the polymerisation process. The bulk density plays an important role in the preparation, the purification, the storage, the transport and the processing of the alternating polymers. In the polymer preparation the bulk density determines the quantity of polymer that can be prepared in a certain reactor volume. In the polymer purification, such as in filtering, washing and drying, the quantity of adhering liquid is largely determined by the polymer bulk density. As far as transport and storage are concerned, the rule is that the higher the polymers' bulk density, the more attractive the flow behaviour they will have and the less space they will occupy. As far as the processing of the polymers into shaped objects is concerned, polymer powders with a high bulk density may not need to be compacted in order to make them suitable for further processing in the usual equipment.

The applicant has experienced that by modifying the composition of the applied catalyst composition, it is possible to influence the bulk density of the prepared polymers. The use of catalyst compositions containing the various aforementioned phosphorus bidentate ligands and containing different quantities of acid enabled polymers to be prepared which exhibited some variation in bulk density, their bulk density was however generally less than 300 kg/m³.

It has now surprisingly been found that polymers of the present type with a bulk density of more than 300 kg/m³ can be prepared by using a catalyst composition of the above-mentioned type in which each of the optionally polar substituted hydrocarbyl groups of the phosphorus bidentate ligand contains a carbon atom which carbon atom carries at most one hydrogen atom and is linked to the corresponding phosphorus atom via a methylene bridge, and which catalyst composition additionally contains more than 5 mol of the acid per gram atom Group VIII metal. These catalyst compositions are novel.

The present patent application therefore relates to catalyst compositions based upon:
a) a Group VIII metal,
b) an acid with a pKa of less than 2 in a quantity of more than 5 mol per gram atom Group VIII metal, and
c) a phosphorus bidentate ligand of the general formula R⁵R⁶P-R-PR⁷R⁸ in which R⁵ to R⁸ represent identical or different, optionally polar substituted hydrocarbyl groups containing a carbon atom which carbon atom carries at most one hydrogen atom and is linked to the corresponding phosphorus atom via a methylene bridge, and in which R is a divalent organic bridging group containing at least two carbon atoms in the bridge connecting the two phosphorus atoms.

The patent application further relates to a process for the preparation of polymers of carbon monoxide with ethene and optionally also with one or more other α-olefins by contacting the monomers in the presence of a liquid diluent in which the polymers are insoluble or virtually insoluble with a catalyst composition according to the invention.

In this patent application, Group VIII metals are understood to be the noble metals ruthenium, rhodium, palladium, osmium, iridium and platinum, as well as the iron group metals iron, cobalt and nickel. The Group VIII metal in the catalyst compositions is preferably selected from palladium, nickel and cobalt. There is particular preference for palladium as Group VIII metal. The incorporation of the Group VIII metal in the catalyst compositions preferably takes place in the form of a salt, typically a salt of a carboxylic acid, in particular in the form of an acetate.

As acids with a pKₐ of less than 2, both mineral acids and organic acids are eligible. Examples of suitable mineral acids are sulphuric acid and perchloric acid. Examples of suitable organic acids are sulphonic acids, such as para-toluenesulphonic acid and trifluoromethanesulphonic acid, and halocarboxylic acids such as trifluoroacetic acid. Preferably, the acid with a pKa of less than 2 incorporated in the catalyst compositions according to the invention is a sulphonic acid or a halocarboxylic acid. The quantity of acid in the catalyst compositions is preferably less than 100 mol and in particular 10-50 mol per gram atom Group VIII metal.

In the phosphorus bidentate ligands of the general formula R⁵R⁶P-R-PR⁷R⁸, the groups R⁵ to R⁸ preferably contain each not more than 10 carbon atoms. There is also preference for phosphorus bidentate ligands in which the groups R⁵ to R⁸ are identical hydrocarbyl groups. Examples of suitable R⁵ to R⁸ groups are the 2-methylpropyl, the 2-methylbutyl, the benzyl, the ortho-, meta- and para-methylbenzyl, the ortho- and para-chlorobenzyl and the ortho-methoxybenzyl groups. As regards the bridging group R, present in the phosphorus bidentate ligands, there is preference for bridging groups containing three atoms in the bridge. Examples of suitable bridging groups R are the -CH₂-CH₂-CH₂- group, the -CH₂-C(CH₃)₂-CH₂- group and the -CH₂-Si(CH₃)₂-CH₂- group. Very suitable phosphorus bidentate ligands are 1,3-bis[bis(2-methylpropyl)phosphino]propane and 1,3-bis(dibenzylphosphino)propane. In the catalyst compositions the phosphorus bidentate ligands are preferably employed in a quantity of 0.5-2 and in particular 0.75-1.5 mol per gram atom Group VIII metal.

In addition to a phosphorus bidentate ligand and an acid with a pKa of less than 2, the catalyst compositions according to the invention contain preferably also an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. There is preference for 1,4-quinones and in particular 1,4-benzoquinone and 1,4-naphthoquinone. The organic oxidizing agent is preferably present in the catalyst compositions in a quantity of 5-5000 and in particular 10-1000 mol per gram atom Group VIII metal.

When the catalyst compositions according to the invention are employed for the preparation of polymers of carbon monoxide with ethene and additionally with one or more other α-olefins, the latter α-olefins preferably contain less than 10 carbon atoms per molecule. The catalyst compositions according to the invention are particularly important for the preparation of copolymers of carbon monoxide with ethene and terpolymers of carbon monoxide with ethene and propene.

The preparation of the polymers is carried out in the presence of a liquid diluent. As diluents, polar liquids are preferably used. These liquids can be protic or aprotic. Suitable protic liquids are lower alcohols, such as methanol. Examples of suitable aprotic liquids are acetone and tetrahydrofuran. The polymer preparation can be carried out both batchwise and continuously.

The quantity of catalyst composition used in the preparation of the polymers may vary within wide limits. Per mol olefinically unsaturated compound to be polymerized, a quantity of catalyst composition is preferably used which contains 10⁻⁷-10⁻³ and in particular 10⁻⁶-10⁻⁴ gram atom Group VIII metal.

The preparation of the polymers is preferably carried out at a temperature of 20-150°C and a pressure of 2-150 bar and in particular at a temperature of 30-130°C and a pressure of 5-100 bar. The molar ratio of the olefinically unsaturated compounds relative to carbon monoxide is preferably 10:1-1:10 and in particularly 5:1-1:5.

The invention will now be illustrated with reference to the following examples.

### Example 1 (for comparison)

A carbon monoxide/ethene copolymer was prepared as follows. Into a stirred autoclave with a volume of 250 ml a catalyst solution was introduced consisting of:
50 ml methanol,
0.1 mmol palladium acetate,
2 mmol para-toluenesulphonic acid, and
0.12 mmol 1,3-bis(diphenylphosphino)propane.

After introducing 20 bar ethene and 30 bar carbon monoxide, the content of the autoclave was heated to 70°C. After 1 hour the polymerization was terminated by cooling the reaction mixture to room temperature and releasing the pressure. The polymer was filtered off, washed with methanol and dried. 14 g copolymer was obtained with a bulk density of 230 kg/m³.

### Example 2 (for comparison)

A carbon monoxide/ethene copolymer was prepared in substantially the same way as in example 1, but with the difference that the catalyst solution contained 0.3 mmol trifluoromethanesulphonic acid instead of para-toluenesulphonic acid and 0.12 mmol 1,3-bis(diethylphosphino)propane instead of 1,3-bis(diphenylphosphino)propane.
14 g copolymer was obtained with a bulk density of 200 kg/m³.

### Example 3 (for comparison)

A carbon monoxide/ethene copolymer was prepared in substantially the same way as in example 1, but with the following differences:
a) the catalyst solution contained 2 mmol trifluoroacetic acid instead of para-toluenesulphonic acid and 0.12 mmol 1,3-bis(diethylphosphino)propane instead of 1,3-bis(diphenylphosphino)propane, and
b) the reaction time was 3 hours instead of 1 hour. 12 g copolymer was obtained with a bulk density of 280 kg/m³.

### Example 4 (for comparison)

A carbon monoxide/ethene copolymer was prepared in substantially the same way as in example 1, but with the following differences:
a) the catalyst solution contained 0.12 mmol 1,3-bis(di-n-butylphosphino)propane instead of 1,3-bis(diphenylphosphino)propane, and
b) the reaction time was 5 hours instead of 1 hour.
   14 g copolymer was obtained with a bulk density of 200 kg/m³.

### Example 5 (for comparison)

A carbon monoxide/ethene copolymer was prepared in substantially the same way as in example 1, but with the following differences:
a) the catalyst solution contained 2 mmol trifluoroacetic acid instead of para-toluenesulphonic acid and 0.12 mmol 1,3-bis(di-2-propylphosphino)propane instead of 1,3-bis(diphenylphosphino)propane, and
b) the reaction time was 5 hours instead of 1 hour.
   12.5 g copolymer was obtained with a bulk density of 220 kg/m³.

### Example 6 (for comparison)

A carbon monoxide/ethene copolymer was prepared in substantially the same way as in example 1, but with the following differences:
a) the catalyst solution contained 2 mmol trifluoroacetic acid instead of para-toluenesulphonic acid and 0.12 mmol 1,3-bis(di-2-butylphosphino)propane instead of 1,3-bis(diphenylphosphino)propane, and
b) the reaction time was 3 hours instead of 1 hour.
   10 g copolymer was obtained with a bulk density of 200 kg/m³.

### Example 7 (for comparison)

A carbon monoxide/ethene copolymer was prepared in substantially the same way as in example 1, but with the following differences:
a) the catalyst solution contained 0.3 mmol trifluoromethanesulphonic acid instead of para-toluenesulphonic acid and 0.12 mmol 1,3-bis[bis(2-methylpropyl)phosphino]propane instead of 1,3-bis(diphenylphosphino)propane, and
b) the reaction time was 2 hours instead of 1 hour.
   13 g copolymer was obtained with a bulk density of 200 kg/m³.

### Example 8

A carbon monoxide/ethene copolymer was prepared in substantially the same way as in example 1, but with the following differences:
a) the catalyst solution contained 2 mmol trifluoroacetic acid instead of para-toluenesulphonic acid and 0.12 mmol 1,3-bis[bis(2-methylpropyl)phosphino]propane instead of 1,3-bis(diphenylphosphino)propane, and
b) the reaction time was 5 hours instead of 1 hour.
   12.5 g copolymer was obtained with a bulk density of 460 kg/m³.

### Example 9

A carbon monoxide/ethene copolymer was prepared in substantially the same way as in example 1, but with the following differences:
a) the catalyst solution contained 2 mmol trifluoroacetic acid instead of para-toluenesulphonic acid and 0.12 mmol 1,3-bis(dibenzylphosphino)propane instead of 1,3-bis(diphenylphosphino)propane, and
b) the reaction time was 5 hours instead of 1 hour.
   10 g copolymer was obtained with a bulk density of 450 kg/m³.

### Example 10

A carbon monoxide/ethene copolymer was prepared in substantially the same way as in example 1, but with the following differences:
a) the catalyst solution contained 0.12 mmol 1,3-bis[bis(2-methylpropyl)phosphino]propane instead of 1,3-bis(diphenylphosphino)propane, and
b) the reaction time was 2 hours instead of 1 hour.
   14 g copolymer was obtained with a bulk density of 470 kg/m³.

### Example 11

A carbon monoxide/ethene copolymer was prepared in substantially the same way as in example 1, but with the difference that the catalyst solution contained 2 mmol trifluoromethanesulphonic acid instead of para-toluenesulphonic acid and 0.12 Sol 1,3-bis[bis(2-methylpropyl)phosphino]propane instead of 1,3-bis(diphenylphosphino)propane.

14 g copolymer was obtained with a bulk density of 480 kg/m³.

Of the examples 1-11, examples 8-11 are according to the invention. According to these examples, carbon monoxide/ethene copolymers with a bulk density of more than 300 kg/m³ were prepared by using catalyst compositions according to the invention which contained 20 mol acid per gram atom palladium and in which the tetrahydrocarbylbisphosphines contained 2-methylpropyl or benzyl groups as hydrocarbyl groups. Examples 1-7 fall outside the scope of the invention and have been included in the patent application for comparison. The carbon monoxide/ethene copolymers according to these examples had a bulk density of less than 300 kg/m³. In examples 1-6, catalyst compositions were used in which the tetrahydrocarbylbisphosphines contained phenyl, ethyl, n-butyl, 2-propyl or 2-butyl groups as hydrocarbyl groups. In example 2 the catalyst composition additionally contained only 3 mol acid per gram atom palladium. In example 7, although a catalyst composition was used in which the tetrahydrocarbylbisphosphines contained 2-methylpropyl groups as hydrocarbyl groups, the composition contained only 3 mol acid per gram atom palladium.

It was established by NMR analysis that the polymers prepared according to examples 1-11 were built up of linear chains in which the units originating in carbon monoxide and the units originating in ethene occurred in an alternating order.

## Claims (Claims for the following Contracting State(s): BE, DE, FR, GB, IT, NL)

1. Catalyst compositions based upon:
a) a Group VIII metal,
b) an acid with a pKa of less than 2 in a quantity of more than 5 mol per gram atom Group VIII metal, and
c) a phosphorus bidentate ligand of the general formula R⁵R⁶P-R-PR⁷R⁸ in which R⁵ to R⁸ represent identical or different, optionally polar substituted hydrocarbyl groups containing a carbon atom which carbon atom carries at most one hydrogen atom and is linked to the corresponding phosphorus atom via a methylene bridge, and in which R is a divalent organic bridging group containing at least two carbon atoms in the bridge connecting the two phosphorus atoms.

2. Catalyst compositions according to claim 1, characterized in that they contain palladium as Group VIII metal which is incorporated therein in the form of a salt of a carboxylic acid such as an acetate.

3. Catalyst compositions according to claim 1 or 2, characterized in that they contain 10-50 mol acid per gram atom Group VIII metal.

4. Catalyst compositions according to one or more of claims 1-3, characterized in that they contain a sulphonic acid or a halocarboxylic acid as acid.

5. Catalyst compositions according to one or more of claims 1-4 characterized in that the groups R⁵ to R⁸ in the phosphorus bidentate ligand contain each not more than 10 carbon atoms.

6. Catalyst compositions according to one or more of claims 1-5, characterized in that the groups R⁵ to R⁸ in the phosphorus bidentate ligand are identical hydrocarbyl groups and in that the bridging group R contains three atoms in the bridge.

7. Catalyst compositions according to claim 6, characterized in that they contain 1,3-bis[bis(2-methylpropyl)phosphino]propane or 1,3-bis(dibenzylphosphino)propane as phosphorus bidentate ligand.

8. Catalyst compositions according to one or more of claims 1-7, characterized in that they contain the phosphorus bidentate ligand in a quantity of 0.75-1.5 mol per gram atom Group VIII metal.

9. Process for the preparation of polymers, characterized in that polymers of carbon monoxide with ethene and optionally also with one or more other α-olefins are prepared by contacting the monomers in the presence of a liquid diluent in which the polymers are insoluble or virtually insoluble with a catalyst composition according to one or more of claims 1-8.

10. Process according to claim 9, characterized in that it is employed for the preparation of copolymers of carbon monoxide with ethene or terpolymers of carbon monoxide with ethene and an α-olefin containing less than 10 carbon atoms, such as propene.

11. Process according to claim 9 or 10, characterized in that it is carried out at a temperature of 30-130°C, a pressure of 5-100 bar and a molar ratio of the olefinically unsaturated compounds relative to carbon monoxide of 5:1-1:5, using a quantity of catalyst composition which per mol olefinically unsaturated compound to be polymerized contains 10⁻⁶-10⁻⁴ gram atom Group VIII metal and using as the diluent a protic liquid such as methanol or an aprotic liquid such as acetone or tetrahydrofuran.

## Claims (Claims for the following Contracting State(s): ES)

1. Process for preparing a catalyst composition, comprising combining:
a) a Group VIII metal,
b) an acid with a pKa of less than 2 in a quantity of more than 5 mol per gram atom Group VIII metal, and
c) a phosphorus bidentate ligand of the general formula R⁵R⁶P-R-PR⁷R⁸ in which R⁵ to R⁸ represent identical or different, optionally polar substituted hydrocarbyl groups containing a carbon atom which carbon atom carries at most one hydrogen atom and is linked to the corresponding phosphorus atom via a methylene bridge, and in which R is a divalent organic bridging group containing at least two carbon atoms in the bridge connecting the two phosphorus atoms.

2. Process according to claim 1, characterized in that the Group VIII metal is palladium which is applied in the form of a salt of a carboxylic acid such as an acetate.

3. Process according to claim 1 or 2, characterized in that the acid is applied in a quantity of 10-50 mol per gram atom Group VIII metal.

4. Process according to one or more of claims 1-3, characterized in that the acid is a sulphonic acid or a halocarboxylic acid.

5. Process according to one or more of claims 1-4 characterized in that the groups R⁵ to R⁸ in the phosphorus bidentate ligand contain each not more than 10 carbon atoms.

6. Process according to one or more of claims 1-5, characterized in that the groups R⁵ to R⁸ in the phosphorus bidentate ligand are identical hydrocarbyl groups and in that the bridging group R contains three atoms in the bridge.

7. Process according to claim 6, characterized in that the phosphorus bidentate ligand is 1,3-bis[bis(2-methylpropyl)phosphino]propane or 1,3-bis(dibenzylphosphino)propane.

8. Process according to one or more of claims 1-7, characterized in that the phosphorus bidentate ligand is applied in a quantity of 0.75-1.5 mol per gram atom Group VIII metal.

9. Process for the preparation of polymers, characterized in that polymers of carbon monoxide with ethene and optionally also with one or more other α-olefins are prepared by contacting the monomers in the presence of a liquid diluent in which the polymers are insoluble or virtually insoluble with a catalyst composition which is obtainable by a process according to one or more of claims 1-8.

10. Process according to claim 9, characterized in that it is employed for the preparation of copolymers of carbon monoxide with ethene or terpolymers of carbon monoxide with ethene and an α-olefin containing less than 10 carbon atoms, such as propene.

11. Process according to claim 9 or 10, characterized in that it is carried out at a temperature of 30-130 °C, a pressure of 5-100 bar and a molar ratio of the olefinically unsaturated compounds relative to carbon monoxide of 5:1-1:5, using a quantity of catalyst composition which per mol olefinically unsaturated compound to be polymerized contains 10⁻⁶-10⁻⁴ gram atom Group VIII metal and using as the diluent a protic liquid such as methanol or an aprotic liquid such as acetone or tetrahydrofuran.

## Patentansprüche (Patentansprüche für folgende(n) Vertragsstaat(en): BE, DE, FR, GB, IT, NL)

1. Katalysatorzusammensetzungen, basierend auf:
a) einem Metall der Gruppe VIII,
b) einer Säure mit einem pKa-Wert unter 2 in einer Menge von über 5 mol pro Grammatom des Metalls der Gruppe VIII und
c) einem zweizähnigen Phosphorliganden der allgemeinen Formel R⁵R⁶P-R-PR⁷R⁸, worin R⁵ bis R⁸ für gleiche oder verschiedene, gegebenenfalls polar substituierte Kohlenwasserstoffgruppen, die ein höchstens ein Wasserstoffatom tragendes und mit dem entsprechenden Phosphoratom über eine Methylengruppe verbundenes Kohlenstoffatom enthalten, stehen und R für eine die beiden Phosphoratome verbindende zweiwertige organische Brückengruppe mit mindestens zwei Kohlenstoffatomen in der Brücke steht.

2. Katalysatorzusammensetzungen nach Anspruch 1, dadurch gekennzeichnet, daß sie als Metall der Gruppe VIII in Form eines Carbonsäuresalzes, wie z.B. eines Acetats, eingearbeitetes Palladium enthalten.

3. Katalysatorzusammensetzungen nach Anspruch 1 oder 2, dadurch gekennzeichnet, daß sie 10-50 mol Säure pro Grammatom des Metalls der Gruppe VIII enthalten.

4. Katalysatorzusammensetzungen nach einem oder mehreren der Ansprüche 1-3, dadurch gekennzeichnet, daß sie als Säure eine Sulfonsäure oder eine Halogencarbonsäure enthalten.

5. Katalysatorzusammensetzungen nach einem oder mehreren der Ansprüche 1-4, dadurch gekennzeichnet, daß die Gruppen R⁵ bis R⁸ des zweizähnigen Phosphorliganden jeweils nicht mehr als 10 Kohlenstoffatome enthalten.

6. Katalysatorzusammensetzungen nach einem oder mehreren der Ansprüche 1-5, dadurch gekennzeichnet, daß die Gruppen R⁵ bis R⁸ des zweizähnigen Phosphorliganden gleiche Kohlenwasserstoffgruppen darstellen und die Brückengruppe R drei Atome in der Brücke enthält.

7. Katalysatorzusammensetzungen nach Anspruch 6, dadurch gekennzeichnet, daß sie als zweizähnigen Phosphorliganden 1,3-Bis[bis(2-methylpropyl)phosphinol-propan oder 1,3-Bis(dibenzylphosphino)propan enthalten.

8. Katalysatorzusammensetzungen nach einem oder mehreren der Ansprüche 1-7, dadurch gekennzeichnet, daß sie den zweizähnigen Phosphorliganden in einer Menge von 0,75-1,5 mol pro Grammatom des Metalls der Gruppe VIII enthalten.

9. Verfahren zur Herstellung von Polymeren, dadurch gekennzeichnet, daß man Polymere aus Kohlenmonoxid und Ethen und gegebenenfalls noch einem oder mehreren weiteren α-Olefinen durch Inberührungbringen der Monomere mit einer Katalysatorzusammensetzung gemäß einem oder mehreren der Ansprüche 1-8 in Gegenwart eines flüssigen Verdünnungsmittels, in welchem die Polymere vollständig oder praktisch unlöslich sind, herstellt.

10. Verfahren nach Anspruch 9, dadurch gekennzeichnet, daß man es zur Herstellung von Copolymeren aus Kohlenmonoxid und Ethen oder von Terpolymeren aus Kohlenmonoxid, Ethen und einem α-Olefin mit weniger als 10 Kohlenstoffatomen, wie z.B. Propen, verwendet.

11. Verfahren nach Anspruch 9 oder 10, dadurch gekennzeichnet, daß man es bei einer Temperatur von 30-130°C, einem Druck von 5-100 bar und einem Molverhältnis der olefinisch ungesättigten Verbindungen zu Kohlenmonoxid von 5:1-1:5 unter Verwendung einer Menge an Katalysatorzusammensetzung, die pro Mol zu polymerisierender olefinisch ungesättigter Verbin-dung 10⁻⁶ - 10⁻⁴ Grammatom des Metalls der Gruppe VIII enthält, und einer protischen Flüssigkeit, wie z.B. Methanol, oder einer aprotischen Flüssigkeit, wie z.B. Aceton oder Tetrahydrofuran, als Verdünnungsmittel durchführt.

## Patentansprüche (Patentansprüche für folgende(n) Vertragsstaat(en): ES)

1. Verfahren zur Herstellung einer Katalysatorzusammensetzung, bei dem man
a) ein Metall der Gruppe VIII,
b) eine Säure mit einem pKa-Wert unter 2 in einer Menge von über 5 mol pro Grammatom des Metalls der Gruppe VIII und
c) einen zweizähnigen Phosphorliganden der allgemeinen Formel R⁵R⁶P-R-PR⁷R⁸, worin R⁵ bis R⁸ für gleiche oder verschiedene, gegebenenfalls polar substituierte Kohlenwasserstoffgruppen, die ein höchstens ein Wasserstoffatom tragendes und mit dem entsprechenden Phosphoratom über eine Methylengruppe verbundenes Kohlenstoffatom enthalten, stehen und R für eine die beiden Phosphoratome verbindende zweiwertige organische Brückengruppe mit mindestens zwei Kohlenstoffatomen in der Brücke steht,
kombiniert.

2. Verfahren nach Anspruch 1, dadurch gekennzeichnet, daß man als Metall der Gruppe VIII Palladium in Form eines Carbonsäuresalzes, wie z.B. eines Acetats, einsetzt.

3. Verfahren nach Anspruch 1 oder 2, dadurch gekennzeichnet, daß man die Säure in einer Menge von 10-50 mol pro Grammatom des Metalls der Gruppe VIII einsetzt.

4. Verfahren nach einem oder mehreren der Ansprüche 1-3, dadurch gekennzeichnet, daß man als Säure eine Sulfonsäure oder eine Halogencarbonsäure einsetzt.

5. Verfahren nach einem oder mehreren der Ansprüche 1-4, dadurch gekennzeichnet, daß die Gruppen R⁵ bis R⁸ des zweizähnigen Phosphorliganden jeweils nicht mehr als 10 Kohlenstoffatome enthalten.

6. Verfahren nach einem oder mehreren der Ansprüche 1-5, dadurch gekennzeichnet, daß die Gruppen R⁵ bis R⁸ des zweizähnigen Phosphorliganden gleiche Kohlenwasserstoffgruppen darstellen und die Brückengruppe R drei Atome in der Brücke enthält.

7. Verfahren nach Anspruch 6, dadurch gekennzeichnet, daß man als zweizähnigen Phosphorliganden 1,3-Bis[bis(2-methylpropyl)phosphino]propan oder 1,3-Bis(dibenzylphosphino)propan einsetzt.

8. Verfahren nach einem oder mehreren der Ansprüche 1-7, dadurch gekennzeichnet, daß man den zweizähnigen Phosphorliganden in einer Menge von 0,75-1,5 mol pro Grammatom des Metalls der Gruppe VIII einsetzt.

9. Verfahren zur Herstellung von Polymeren, dadurch gekennzeichnet, daß man Polymere aus Kohlenmonoxid und Ethen und gegebenenfalls noch einem oder mehreren weiteren α-Olefinen durch Inberührungbringen der Monomere mit einer nach einem Verfahren gemäß einem der Ansprüche 1-8 erhältlichen Katalysatorzusammensetzung in Gegenwart eines flüssigen Verdünnungsmittels, in welchem die Polymere vollständig oder praktisch unlöslich sind, herstellt.

10. Verfahren nach Anspruch 9, dadurch gekennzeichnet, daß man es zur Herstellung von Copolymeren aus Kohlenmonoxid und Ethen oder von Terpolymeren aus Kohlenmonoxid, Ethen und einem α-Olefin mit weniger als 10 Kohlenstoffatomen, wie z.B. Propen, verwendet.

11. Verfahren nach Anspruch 9 oder 10, dadurch gekennzeichnet, daß man es bei einer Temperatur von 30-130°C, einem Druck von 5-100 bar und einem Molverhältnis der olefinisch ungesättigten Verbindungen zu Kohlenmonoxid von 5:1-1:5 unter Verwendung einer Menge an Katalysatorzusammensetzung, die pro Mol zu polymerisierender olefinisch ungesättigter Verbindung 10⁻⁶ - 10⁻⁴ Grammatom des Metalls der Gruppe VIII enthält, und einer protischen Flüssigkeit, wie z.B. Methanol, oder einer aprotischen Flüssigkeit, wie z.B. Aceton oder Tetrahydrofuran, als Verdünnungsmittel durchführt.

## Revendications (Revendications pour l'(les) Etat(s) contractant(s) suivant(s): BE, DE, FR, GB, IT, NL)

1. Compositions catalytiques à base de :
a) un métal du groupe VIII,
b) un acide possédant un pKa inférieur à 2, en une quantité supérieure à 5 moles par atome-gramme de métal du groupe VIII et
c) un ligand bidentate du phosphore de la formule générale R⁵R⁶P-R-PR⁷R⁸ dans laquelle R⁵ à R⁸ représentent des radicaux hydrocarbyle substitués, éventuellement polaires, identiques ou différents, contenant un atome de carbone, lequel atome de carbone porte au plus un atome d'hydrogène et est lié à l'atome de phosphore correspondant par un pont méthylène et dans laquelle R représente un radical de pontage organique bivalent contenant au moins deux atomes de carbone dans le pont reliant les deux atomes de phosphore.

2. Compositions catalytiques suivant la revendication 1, caractérisées en ce qu'elles contiennent du palladium à titre de métal du groupe VIII, qui y est incorporé sous la forme d'un sel d'un acide carboxylique, comme un acétate.

3. Compositions catalytiques suivant la revendication 1 ou 2, caractérisées en ce qu'elles contiennent 10 à 50 moles d'acide par atome-gramme du métal du groupe VIII.

4. Compositions catalytiques suivant une ou plusieurs des revendications 1 à 3, caractérisées en ce qu'elles contiennent un acide sulfonique ou un acide halocarboxylique à titre d'acide.

5. Compositions catalytiques suivant une ou plusieurs des revendications 1 à 4, caractérisées en ce que les groupes R⁵ à R⁸ dans le ligand bidentate du phosphore ne contiennent chacun pas plus de 10 atomes de carbone.

6. Compositions catalytiques suivant une ou plusieurs des revendications 1 à 5, caractérisées en ce que les groupes R⁵ à R⁸ dans le ligand bidentate du phosphore sont des groupes hydrocarbyle identiques et en ce que le groupe de pontage R contient 3 atomes dans le pont.

7. Compositions catalytiques suivant la revendication 6, caractérisées en ce qu'elles contiennent du 1,3-bis[bis(2-méthylpropyl)phosphino]propane ou du 1,3-bis-(dibenzylphosphino)propane à titre de ligand bidentate du phosphore.

8. Compositions catalytiques suivant une ou plusieurs des revendications 1 à 7, caractérisées en ce qu'elles contiennent le ligand bidentate du phosphore en une proportion de 0,75 à 1,5 mole par atome-gramme de métal du groupe VIII.

9. Procédé de préparation de polymères, caractérisé en ce que l'on prépare des polymères du monoxyde de carbone avec l'éthène et éventuellement aussi avec une ou plusieurs autres α-oléfines par la mise en contact des monomères, en présence d'un diluant liquide dans lequel les polymères sont insolubles ou pratiquement insolubles, avec une composition catalytique suivant une ou plusieurs des revendications 1 à 8.

10. Procédé suivant la revendication 9, caractérisé en ce que l'on utilise pour la préparation de copolymères du monoxyde de carbone avec l'éthène ou de terpolymères du monoxyde de carbone avec l'éthène et une α-oléfine contenant moins de 10 atomes de carbone, comme le propène.

11. Procédé suivant la revendication 9 ou 10, caractérisé en ce qu'on l'entreprend à une température de 30 à 130°C, sous une pression de 5 à 100 bars et avec un rapport molaire des composés oléfiniquement insaturés au monoxyde de carbone de 5:1 à 1:5, en utilisant une quantité de composition catalytique qui, par mole de composé oléfiniquement insaturé à polymériser, contient 10⁻⁶-10⁻⁴ atome-gramme de métal du groupe VIII et en utilisant, à titre de diluant, un liquide protique, comme le méthanol, ou un liquide aprotique, comme l'acétone ou le tétrahydrofuranne.

## Revendications (Revendications pour l'(les) Etat(s) contractant(s) suivant(s): ES)

1. Procédé de préparation d'une composition catalytique, comprenant la combinaison de :
a) un métal du groupe VIII,
b) un acide possédant un pKa inférieur à 2, en une quantité supérieure à 5 moles par atome-gramme de métal du groupe VIII et
c) un ligand bidentate du phosphore de la formule générale R⁵R⁶P-R-PR⁷R⁸ dans laquelle R⁵ à R⁸ représentent des radicaux hydrocarbyle substitués, éventuellement polaires, identiques ou différents, contenant un atome de carbone, lequel atome de carbone porte au plus un atome d'hydrogène et est lié à l'atome de phosphore correspondant par un pont méthylène et dans laquelle R représente un radical de pontage organique bivalent contenant au moins deux atomes de carbone dans le pont reliant les deux atomes de phosphore.

2. Procédé suivant la revendication 1, caractérisé en ce que le métal du groupe VIII est le palladium que l'on applique sous la forme d'un sel d'un acide carboxylique, comme un acétate.

3. Procédé suivant la revendication 1 ou 2, caractérisé en ce que l'on applique l'acide en une proportion de 10 à 50 moles par atome-gramme de métal du groupe VIII.

4. Procédé suivant l'une quelconque des revendications 1 à 3, caractérisé en ce que l'acide est un acide sulfonique ou un acide halocarboxylique.

5. Procédé suivant une ou plusieurs des revendications 1 à 4, caractérisé en ce que les groupes R⁵ à R⁸ dans le ligand bidentate du phosphore ne contiennent chacun pas plus de 10 atomes de carbone.

6. Procédé suivant une ou plusieurs des revendications 1 à 5, caractérisé en ce que les groupes R⁵ à R⁸ dans le ligand bidentate du phosphore sont des groupes hydrocarbyle identiques et en ce que le groupe de pontage R contient 3 atomes dans le pont.

7. Procédé suivant la revendication 6, caractérisé en ce que le ligand bidentate du phosphore est le 1,3-bis[bis(2-méthylpropyl)phosphino]propane ou du 1,3-bis-(dibenzylphosphino)propane.

8. Procédé suivant une ou plusieurs des revendications 1 à 7, caractérisé en ce que le ligand bidentate du phosphore est appliqué en une quantité de 0,75 à 1,5 mole par atome-gramme de métal du groupe VIII.

9. Procédé de préparation de polymères, caractérisé en ce que l'on prépare des polymères du monoxyde de carbone avec l'éthène et éventuellement aussi avec une ou plusieurs autres α-oléfines par la mise en contact des monomères, en présence d'un diluant liquide dans lequel les polymères sont insolubles ou pratiquement insolubles, avec une composition catalytique que l'on peut obtenir par un procédé suivant une ou plusieurs des revendications 1 à 8.

10. Procédé suivant la revendication 9, caractérisé en ce que l'on utilise pour la préparation de copolymères du monoxyde de carbone avec l'éthène ou de terpolymères du monoxyde de carbone avec l'éthène et une α-oléfine contenant moins de 10 atomes de carbone, comme le propène.

11. Procédé suivant la revendication 9 ou 10, caractérisé en ce qu'on l'entreprend à une température de 30 à 130°C, sous une pression de 5 à 100 bars et avec un rapport molaire des composés oléfiniquement insaturés au monoxyde de carbone de 5:1 à 1:5, en utilisant une quantité de composition catalytique qui, par mole de composé oléfiniquement insaturé à polymériser, contient 10⁻⁶-10⁻⁴ atome-gramme de métal du groupe VIII et en utilisant, à titre de diluant, un liquide protique, comme le méthanol, ou un liquide aprotique, comme l'acétone ou le tétrahydrofuranne.
